# EUROPEAN PATENT APPLICATION

(11) **EP 4 763 798 A1**
(43) Date of publication of application: **24.06.2026**
(21) Application number: 24222823.7
(22) Date of filing: 23.12.2024
(51) Int. Cl.: C01B 3/04, C01B 3/56

(54) **AMMONIA CRACKING FOR PRODUCING A CRACKED GAS FROM AMMONIA**

(71) Applicant: CASALE SA, 6900 Lugano (CH)
(72) Inventor: PIPINO, Aurelia, 6932 Breganzona (CH); DI ADDEZIO, Dario, 6900 Lugano (CH)
(74) Representative: M. Zardi & Co S.A.

(57) **Abstract**

A process for the catalytic synthesis of a cracked gas (10) from ammonia (NH₃) comprising the following steps:
(a) preheating and evaporation (2) of liquid ammonia (1) to obtain an ammonia gaseous stream (3);
(b) catalytic cracking (5) of said ammonia gaseous stream (3) to yield a cracked gas (10) containing nitrogen, hydrogen, and unreacted ammonia;
(c) cooling of said cracked gas (10) by exchanging heat at least with said liquid ammonia (1) and/or at least part (26) of a vaporized ammonia stream (8);
(d) recovery (13) of at least part of said unreacted ammonia from the cracked gas of step (c) to obtain an ammonia-depleted stream (15) and an ammonia-enriched stream (14); wherein step (d) comprises:
(d.1) selective adsorption of ammonia on at least one molecular sieve to obtain an ammonia-charged molecular sieve and said ammonia-depleted stream (15); and
(d.2) desorption of ammonia performed by increasing a temperature of said ammonia-charged molecular sieve, and purging with a purge stream (7), to obtain said ammonia-enriched stream (14);

(e) recirculation of at least a portion of the ammonia-enriched stream (14) as feed to step (b), optionally after pre-heating and evaporation.

## Description

### Field of application

The invention is in the field of hydrogen production and particularly pertains to a process for the production of hydrogen by ammonia cracking.

### Prior art

The excessive use of fossil fuels both in the electricity and transportation sector has resulted in harmful effects on human health and welfare, as well as on the environment. Currently, there is a strong need to come up with environmental and sustainable alternatives to fossil fuels due to increasing stringent emissions regulations and environmental awareness.

Hydrogen (H₂) and ammonia (NH₃) are carbon-free carriers and are considered ideal replacements of fossil fuels.

At a small scale, hydrogen can be produced from various domestic resources such as solar power, wind power, and electrolysis. Conversely, at an industrial scale, hydrogen is obtained via reforming of fossil fuels mostly by reforming of natural gas (steam reforming) or water gas shift of coal-derived syngas.

Hydrogen produced by steam reforming requires a multistep process, starting from natural gas desulphurization, high-temperature reforming, high and low-temperature water-gas shift conversions (WGS), and purification.

Unfortunately, as a result of the reforming process, large amounts of carbon dioxide (CO₂) are emitted into the atmosphere.

Green ammonia - i.e. ammonia produced by renewable energy sources such as wind or solar energy - is a carbon-free storage vector of hydrogen with many potential energy applications, including the production of green hydrogen. Hydrogen can be obtained from ammonia via a thermal decomposition process known as ammonia cracking. Ammonia cracking is a technology allowing green hydrogen to be available in places where geographical limitations make hydrogen production expensive and/or insufficient.

In a catalytic ammonia cracking process, ammonia is decomposed ("cracked") into H₂ and nitrogen (N₂) in presence of heat and of a catalyst (Ni or Ru or Pt) according to the following chemical equilibrium:

2 NH₃ ↔ 3H₂ + N₂

Thermodynamic conversion of ammonia to hydrogen is possible at a temperature as low as 425 °C. However, in practice, the conversion rate depends on the type of catalyst being used. Typically, Ni is active at higher temperatures (500-750 °C) than Ru (400 °C) at atmospheric pressure, but this latter catalyst is more expensive.

Energy transition challenges require to boost green hydrogen production by proposing new solutions to increase process and plant capacities over the currently known technologies.

### Summary of the invention

The invention aims to overcome the above drawbacks of the prior art. In particular, the problem addressed by the invention is how to increase process and plant capacities for producing hydrogen by the route of catalytic cracking.

An object of the present invention is a process for the catalytic synthesis of a cracked gas from ammonia (NH₃) comprising the following steps:
(a) preheating and evaporation of liquid ammonia to obtain an ammonia gaseous stream;
(b) catalytic cracking of said ammonia gaseous stream to yield a cracked gas containing nitrogen, hydrogen, and unreacted ammonia;
(c) cooling of said cracked gas by exchanging heat at least with said liquid ammonia and/or at least part of a vaporized ammonia stream;
(d) recovery of at least part of said unreacted ammonia from the cracked gas of step (c) to obtain an ammonia-depleted stream and an ammonia-enriched stream; wherein step (d) comprises:
   (d.1) selective adsorption of ammonia on at least one molecular sieve to obtain an ammonia-charged molecular sieve and said ammonia-depleted stream; and
   (d.2) desorption of ammonia performed by increasing a temperature of said ammonia-charged molecular sieve, and purging with a purge stream, to obtain said ammonia-enriched stream;
(e) recirculation of at least a portion of the ammonia-enriched stream as feed to step (b), optionally after pre-heating and evaporation.

### Advantageous effects of the invention

Advantageously, the process of the present invention is capable of boosting the capacity achievable by single train processes and plants.

Advantageously, use of an ammonia gaseous stream for purging in the process of the present invention allows to recover substantially pure ammonia from the molecular sieve allowing to further improve the process overall efficiency.

Advantageously, drying of ammonia gaseous stream before ammonia cracking allows to improve the catalytic reaction. Steam has an affinity for the active sites of the ammonia cracking catalyst, so that its presence is an inhibiting factor for ammonia cracking. Furthermore, a reduced amount of steam allows also to reduce the ammonia cracking heat of reaction improving performance and consumption while allowing an extension in the ammonia cracking catalyst lifetime.

Advantageously, the process of the present invention allows a better use of the heat recovery system leading to a highly integrated and efficient solution.

Advantageously, the process of the present invention requires no steam generation, no demineralized water source and, eventually, a significant reduction in size of a process condensate treatment system. This results in advantages in terms of CAPEX and OPEX.

Advantageously, the process of the present invention has a reduced cooling water demand.

Advantageously, the use of vaporized ammonia as purge stream for step (d.2) allows not to contaminate/dilute the ammonia feed stream resulting in a reduction of the overall heat required from the process and consequently of the overall plant consumption.

Advantageously, TSA enhances the performances of the applied molecular sieves as it would allow an improvement or optimization of the required adsorption / desorption cycles as such steps may be managed by a dedicated software (e.g., a PLC) to switch the process from an absorption step to a desorption step, and vice versa, in automatic mode.

Advantageously, TPSA enhances desorption performances of the applied molecular sieves by recovering the maximum adsorption capacity thanks to a combined action of temperature and pressure.

Advantageously, TPSA works with less heat energy so that the heat pulse becomes extinguished within the bed, even though part of the molecular sieve remains not desorbed. However, by continuing to supply a purge stream, some of the remaining adsorbate (ammonia) can be removed. In a few cycles, a steady state is reached in which the amount of material added during the feed step is equal to that removed during the regeneration step. However, the benefit of the TPSA cycle is that this can be achieved at a fraction of the heater energy required for operation with a normal TSA cycle.

Advantageously, reduced or no carbon dioxide emissions are freed into the atmosphere with the process of the present invention.

Advantageously, a balance of a supplementary fuel (such as natural gas or other fossil fuel or biofuel) can be added to the fuel made available by the process to sustain the combustion, and thus improving the yield of hydrogen. Due to a relatively low amount of natural gas used in such embodiment, carbon dioxide emissions of the process of the present invention are still lower than emissions expected in a conventional hydrogen synthesis process.

Furthermore, if a biofuel source is available, carbon dioxide (CO₂) is produced without impact on an overall carbon footprint of the process.

Advantageously, heat recovery is improved or maximized in order to provide the heat required for the process, in particular to preheat and/or to evaporate the ammonia feed and/or for the ammonia cracking reaction.

Advantageously, ammonia conversion is improved or maximized in the present process, and consequently the overall ammonia feed consumption is reduced.

Advantageously, the present process allows to increase an overall energy efficiency, reducing the consumption of the makeup fuel required to cover the overall heat demand of the process.

### Preferred embodiments of the present invention

Step (b) is not limited to a specific catalytic cracking technique. As an example, a cracking furnace 5 a may be used in step (b). As other examples, adiabatic cracking and/or gas-heated cracking could be used, optionally in combination with said cracking furnace 5.

According to an embodiment, step (a) comprises an indirect heat exchange of said liquid ammonia 1 and/or of a vaporized ammonia stream 8 with a flue gas 30 of the cracking furnace 5 used in step (b).

In the present description "indirect" means that heat exchange is performed so that the fluids exchanging heat do not mix. An indirect heat exchange involves so only a heat exchange and no mass exchange. An indirect heat exchange may be obtained through a thermal contact of the involved fluids in a heat exchanger, or through a heat transfer medium that exchanges heat with each involved fluid.

Preferably, said cracking furnace 5 includes a plurality of externally heated catalytic tubes.

More preferably, said cracking furnace 5 comprises a convective section 34, and step (a) comprises passing said liquid ammonia 1, or a vaporized ammonia stream 8 deriving therefrom, through said convective section 34 in indirect heat exchange with said flue gas 30 to obtain a heated vaporized ammonia stream 9.

According to a preferred embodiment, said temperature increase of step (d.2) is obtained through heat pulses (intermittent pulses) that heat said ammonia-charged molecular sieve. Preferably, said heat pulses may be provided with a heated purge stream 7.

Heat pulses may have a maximum temperature ≤ 100 °C.

Said heat pulses are preferably provided at a first pressure, and said heat pulses are concurrent, or followed by, purging at a second pressure below said first pressure. At said second pressure, purging may be carried out with an additional purge stream 7.

According to a particularly preferred embodiment, said step (d) comprises at least one one-stage Thermal Pressure Swing Adsorption (TPSA).

"One stage" means that step (d.2) is not performed is an upstream Thermal Swing Adsorption (TSA) stage and then in a downstream Pressure Swing Adsorption (PSA) stage, but in a single stage under an influence of swinging temperature and pressure.

According to another embodiment, said step (d) comprises at least one Thermal Swing Adsorption (TSA).

According to different embodiments, said purge stream 7 comprises or consists of a part 4 of said cracked gas 10, and/or a portion 28 of said vaporized ammonia stream 9, and/or a supplementary purging stream 22 (such as a nitrogen stream or a vapour stream (steam)), and/or an ammonia-enriched stream generated in a step (d.2) performed on a parallel molecular sieve.

Said molecular sieves are preferably contained in at least two beds 23', 23". These beds may have a parallel arrangement. According to another embodiment, parallel beds may have a multibed configuration (i.e., each branch of the parallel beds may comprise two or more beds arranged in sequence).

Preferably, step (d) comprises an at least partial removal of any water 25 contained in the cracked gas 10 or in a cooled cracked stream 12. In this embodiment, after ammonia recovery, stream 15 is a dried ammonia-depleted stream 15.

More preferably, this at least partial water removal may be performed with a dedicated molecular sieve, i.e., a molecular sieve that is not the same molecular sieve used for steps (d.1) and (d.2), or with the same molecular sieve of steps (d.1) and (d.2). In this latter embodiment, ammonia and water are subsequently separated by distillation or evaporation or, expressed in other terms, said ammonia-enriched stream 14 and said water 25 are separated by distillation or evaporation.

According to a preferred embodiment, said beds 23', 23" are arranged so that, when a first bed 23' is subjected to step (d.1), a second bed 23" is subjected to step (d.2). Recovery 13 of step (d) is thus continuous.

According to different embodiments, steps (d.1) and (d.2) may be performed in a same direction, or countercurrently. This means that, in the first embodiment, said cracked gas during step (d.1) and said purge stream 7 during step (d.2) are directed through the same bed (23' or 23") in the same direction. In the second embodiment, said cracked gas during step (d.1) and said purge stream 7 during step (d.2) are directed through the same bed (23' or 23") in opposite directions.

Preferably, said at least one molecular sieve is or comprises a 3A molecular sieve and/or a 4A molecular sieve.

More preferably, said at least one molecular sieve is an aluminosilicate molecular sieve.

Aluminosilicate molecular sieves are crystalline metal aluminosilicates having a three-dimensional interconnecting network of silica and alumina tetrahedra. Natural hydration water is removed from this network by heating to produce uniform cavities which selectively adsorb molecules of a specific size, in the present case ammonia.

Even more preferably, said aluminosilicate molecular sieve has a mean pore size comprised from 0.2 nm to 1 nm, preferably comprised from 0.2 nm to 0.4 nm.

According to an embodiment, the process comprises:
(f) drying 24 of said ammonia gaseous stream 3 upstream of step (b).

Preferably, step (f) comprises passing said ammonia gaseous stream 3 through at least one molecular sieve drying unit 24 wherein any water therein contained is at least partially separated. A stream of separated water 11 is withdrawn from the molecular sieve drying unit 24, and the ammonia gaseous stream 3 is thus dried. Said molecular sieve drying unit 24 more preferably comprises one or more 3A molecular sieve(s).

A residual amount of steam after step (f) may be lower than 1000 ppm by weight, preferably lower than 500 ppm by weight, more preferably lower than 100 ppm by weight, even more preferably lower than 50 ppm by weight.

The ammonia-enriched stream 14 is preferably a substantially anhydrous ammonia stream.

In the present description "anhydrous" means that a residual amount of water may be lower than 1000 ppm by weight, preferably lower than 500 ppm by weight, more preferably lower than 100 ppm by weight, even more preferably lower than 50 ppm by weight.

According to another embodiment, the process comprises:
(g) recirculation of at least a portion 16 of said ammonia-depleted stream 15 as fuel 6 to a cracking furnace 5 used in step (b).

According to still another embodiment, the process comprises:
(h) hydrogen recovery 17 from said ammonia-depleted stream 15 to obtain a hydrogen product 18 and a tail gas 19;
(i) optionally, recirculating at least a portion of said tail gas 19 and/or a portion 20 of said hydrogen product 18, as fuel 6 to a cracking furnace 5 used in step (b).

E.g. said portion of said tail gas 19 is comprised from 0.1% to 100% in terms of total flow, preferably comprised from 80% to 100%. E.g., all said tail gas 19 is recirculated in step (i).

According to different embodiments, said step (h) comprises a step of pressure swing adsorption (PSA), or membrane purification, e.g., Pd-Membrane purification, or cryogenic purification, preferably a PSA step;

Preferably, a temperature of the fired cracked gas exiting the fired cracking step is comprised from 400 °C to 950 °C, more preferably comprised from 550 °C to 750 °C.

According to another embodiment, the step (b) may be carried out at a pressure comprised from 5 barg (bar gauge) to 65 barg, preferably comprised from 15 barg to 60 barg, more preferably comprised from 30 barg to 55 barg, e.g. 50 barg.

Said hydrogen product 18 may have an amount of hydrogen higher than 75% molar, more preferably higher than 90% molar, even more preferably higher than 99% molar, still more preferably higher than 99.7 % molar, such as higher than 99.99999% molar.

### Description of the figures

Fig. 1: schematic representations of the cracked gas synthesis process according to a possible embodiment of the present invention;
Fig. 2.A - Fig. 2.C: schematic representations of an ammonia recovery section, according to a preferred embodiment, in different steps of such recovery;

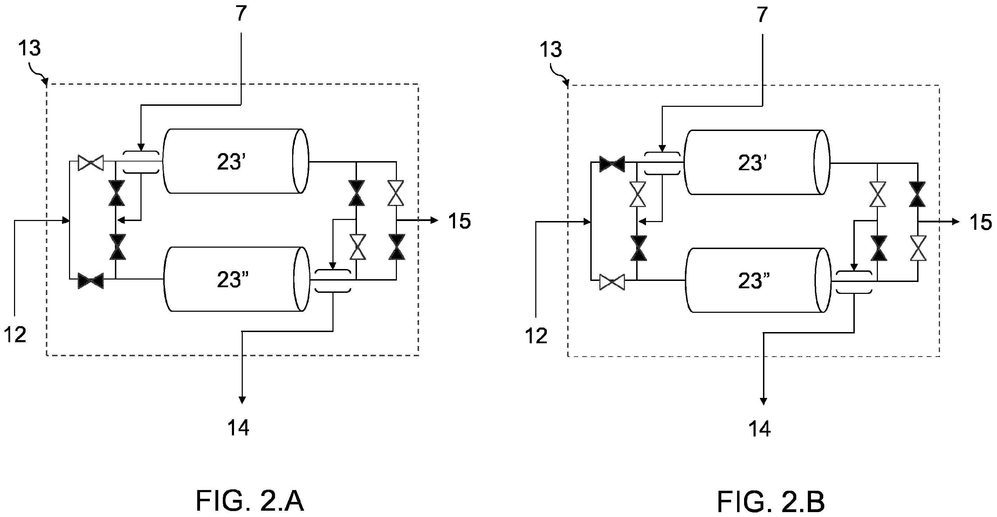

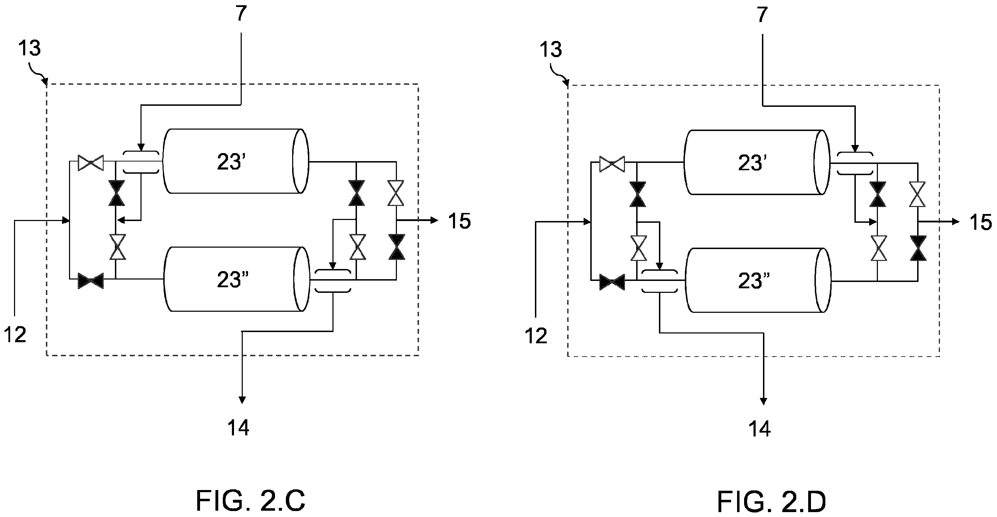

Fig. 2.D: schematic representation of an ammonia recovery section, according to another preferred embodiment, wherein such recovery is performed countercurrent.

### Detailed description of preferred embodiments

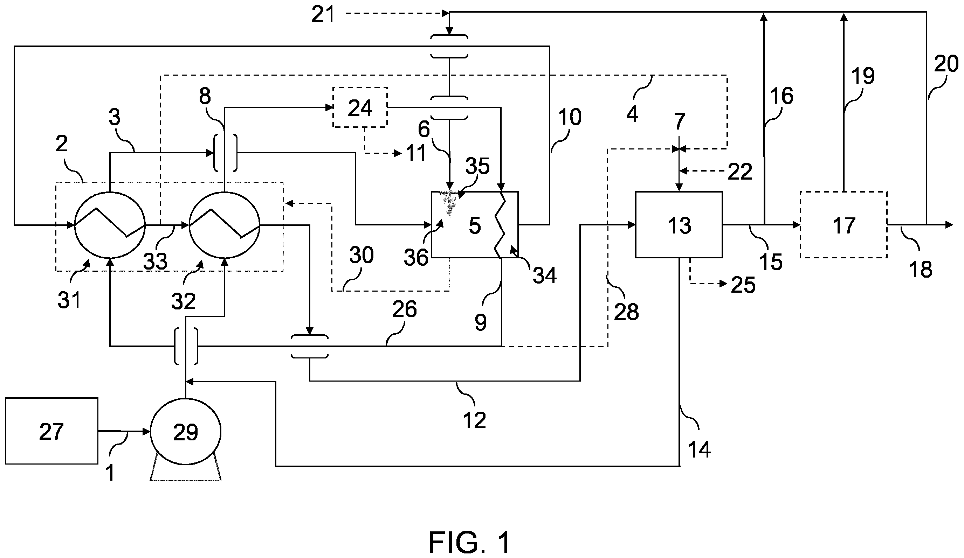

Fig. 1 shows a schematic representation of a cracked gas 10 synthesis process according to an embodiment of the invention.

By means of an ammonia feed pump 29, liquid ammonia 1 is fed from an ammonia source 27 (e.g., a storage feed tank) to preheating and evaporation steps 2 (step (a)), so as to obtain an ammonia gaseous stream 3 that has been heated and vaporized.

During step (a) liquid ammonia 1 is vaporized and the resulting ammonia gaseous stream 3 is preheated to the temperature required for the subsequent ammonia catalytic cracking 5.

The preheating and evaporation steps 2 comprise passing said liquid ammonia 1 - in sequence - through a first indirect heat exchanger 32, a convective section 34 of a cracking furnace 5, and a second indirect heat exchanger 31.

Downstream to the first indirect heat exchanger 32, a vaporized ammonia stream 8 deriving from said liquid ammonia 1 may be fed to an optional molecular sieve drying unit 24 wherein any water therein contained is at least partially separated. A stream of separated water 11 is withdrawn from the molecular sieve drying unit 24, and the ammonia gaseous stream 3 is thus dried.

After step (a), the ammonia gaseous stream 3 is then subjected to catalytic cracking 5 - step (b) - in presence of heat, to yield a cracked gas 10 containing nitrogen, hydrogen, and unreacted ammonia.

The required heat may be provided by burners 35 fed with a fuel 6, as described in detail below, in presence of air or oxygen-enriched air, thus providing a flue gas 30 because of combustion. A portion of said fuel 6 may be a supplementary fuel 21, in particular a hydrocarbon fuel, e.g. natural gas, a biofuel or any other clean fuel.

The ammonia gaseous stream 3 may be supplied to a tube side (i.e., first side) of a plurality of catalyst-filled tubes of a cracking furnace 5, these tubes being heated externally by said burner 35 and flue gas 30.

The cracking furnace 5 typically comprises a radiant section 36 and a convection section 34 to recover heat from the radiant section. Said radiant section 36 preferably comprises said catalyst-filled tubes that retain a cracking catalyst, such as a Ni-based catalyst or a Ru-based catalyst, or a mixture thereof.

The cracked gas 10 is subjected to cooling - step (c) - to obtain a cooled cracked stream 12 by indirect heat exchange.

Such cooling is performed by indirectly exchanging heat with the heated vaporized ammonia stream 9 coming from the cracking furnace 5 (second indirect heat exchanger 31) and then with the liquid ammonia 1 pumped by the ammonia feed pump 29 (first indirect heat exchanger 32).

Between the second indirect heat exchanger 31 and the first indirect heat exchanger 32, the cracked gas 10 may be split into a first part 33 and a second part 4. The first part 33 is passed through the first indirect heat exchanger 32 and then fed to an ammonia recovery section 13 as cooled cracked stream 12. The second part 4 may be used as purge stream 7, as explained herein after.

The cooled cracked stream 12 is processed - step (d) -in the ammonia recovery section 13 to yield an ammonia-depleted stream 15 and an ammonia-enriched stream 14.

Recovery is carried out by selective adsorption of ammonia on at least one molecular sieve to obtain an ammonia-charged molecular sieve and said ammonia-depleted stream 15 (step (d.1)), and by desorption of ammonia performed by increasing a temperature of said ammonia-charged molecular sieve, and purging with the purge stream 7, to obtain said ammonia-enriched stream 14 (step (d.2)).

In step (d.1), said unreacted ammonia contained in the cooled cracked stream 12 is selectively retained by the molecular sieve, whereby the other components of the cooled cracked stream 12 - mainly hydrogen and nitrogen - pass through such molecular sieve without being captured, and are then transported within the ammonia-depleted stream 15. The molecular sieve becomes charged (loaded) by said unreacted ammonia.

In step (d.2), the ammonia-charged molecular sieve is subjected to desorption of ammonia. Such desorption is performed at least by increasing a temperature of said ammonia-charged molecular sieve. Desorbed ammonia is then purged with the purge stream 7, to obtain said ammonia-enriched stream 14.

Such purge stream 7 can comprise or consist of said second part 4 of the cracked gas 10, and/or a supplementary purging stream 22 (e.g., a heated nitrogen stream or a vapour stream (steam)), and/or a portion 28 of said vaporized ammonia stream 9, and/or an ammonia-enriched stream generated in a step (d.2) performed on a parallel molecular sieve.

At least a portion of the ammonia-enriched stream 14 is recycled as feed to the catalytic cracking 5, optionally after pre-heating and evaporating preferably together with said liquid ammonia 1.

Step (d) may also comprise an at least partial removal of any water 25 contained in the cooled cracked stream 12. In this embodiment, after ammonia recovery 13, stream 15 is a dried ammonia-depleted stream 15.

A portion 16 of the ammonia-depleted stream 15 could recirculated as fuel 6 to the cracking furnace 5. Said flue gas 30 of the cracking furnace 5 may be used for performing step (a) and, optionally, for pre-heating and evaporating the ammonia-enriched stream 14 before step (b).

The ammonia-depleted stream 15, or the portion of the ammonia-depleted stream 15 that is not recirculated as fuel, is then fed to a hydrogen recovery section 17 to yield a hydrogen product 18 having a desired purity (e.g. a high-purity) and a tail gas 19.

The hydrogen product 18 is withdrawn from the hydrogen recovery section 17 and stored and/or exported from the plant according to hydrogen demands.

The tail gas 19 is fed as fuel 6 to the cracking furnace 5.

A portion 20 of the hydrogen product 18 may also be fed as fuel 6 to the cracking furnace 5.

The resulting fuel 6 comprises mainly nitrogen, and hydrogen in minor amounts. Combustion of this fuel results in a nitrogen-rich flue gas containing water and oxygen (e.g., this latter in an amount comprised from 1 %vol to 5 %vol, such as 2 %vol).

Fig. 2.A - Fig. 2.C show schematic representations of an ammonia recovery section 13, according to a preferred embodiment, in different steps of such recovery.

The ammonia recovery section 13 comprises at least two beds 23', 23" in a parallel arrangement, each bed containing molecular sieves.

In the condition of Fig. 2.A the cooled cracked stream 12 is fed initially to the first bed 23' only. The valves shown in the figure are actuated accordingly: valves with a black background are in a closed configuration, and valves with a white background are in an open configuration. Such bed 23' carries out step (d.1) and the ammonia-depleted stream 15 is withdrawn only from such bed.

When the molecular sieve of the first bed 23' becomes fully charged, or charged till a predefined threshold, the valves are actuated so that the cooled cracked stream 12 is fed only to the second bed 23". See Fig. 2.B. Simultaneously, a temperature of said ammonia-charged molecular sieve of the first bed 23' is increased to allow desorption of step (d.2), and the purge stream 7 is allowed to enter only the first bed 23' in order to purge desorbed ammonia that is withdrawn from the first bed 23' as ammonia-enriched stream 14.

When the molecular sieve of the second bed 23" becomes fully charged, or charged till the predefined threshold, the valves are actuated so that the cooled cracked stream 12 is fed again only to the first bed 23'. See Fig. 2.C. The second bed 23" is subjected to desorption and purging according to step (d.2). In this way, step (d) is performed continuously.

Fig. 2.D is schematic representation of an ammonia recovery section, according to another embodiment, wherein such recovery is performed countercurrent.

The valves as shown in Fig. 2.D are actuated so that the cooled cracked stream 12 is fed to the first bed 23' only. Simultaneously, the temperature of the ammonia-charged molecular sieve of the second bed 23" is increased to allow desorption of step (d.2), and the purge stream 7 is allowed to enter only the second bed 23" in order to purge desorbed ammonia that is withdrawn from the second bed 23" as ammonia-enriched stream 14.

Besides countercurrent flow, the functioning principles of the embodiment of Fig. 2.D are identical to the embodiment of Fig. 2.A - Fig. 2.C.

### LIST OF THE REFERENCE SIGNS

- 1: liquid ammonia
- 2: preheating and evaporation step
- 3: ammonia gaseous stream
- 4: second part of the cracked gas
- 5: catalytic cracking or cracking furnace
- 6: fuel
- 7: purge stream
- 8: vaporized ammonia stream
- 9: heated vaporized ammonia stream
- 10: cracked gas
- 11: stream of separated water
- 12: cooled cracked stream
- 13: ammonia recovery step or section
- 14: (dried) ammonia-enriched stream
- 15: (dried) ammonia-depleted stream
- 16: portion of the purified gas stream
- 17: hydrogen recovery step
- 18: hydrogen product
- 19: tail gas
- 20: portion of the hydrogen product
- 21: supplementary fuel
- 22: supplementary purging stream
- 23': (first) molecular sieve bed
- 23": (second) molecular sieve bed
- 24: drying step or drying unit
- 25: water
- 26: (first) part of the vaporized ammonia stream
- 27: ammonia source, e.g. storage feed tank
- 28: (second) part of the vaporized ammonia stream
- 29: ammonia feed pump
- 30: flue gas
- 31: second indirect heat exchanger
- 32: first indirect heat exchanger
- 33: first part of the cracked gas
- 34: convective section
- 35: burner
- 36: radiant section

## Claims

1. A process for the catalytic synthesis of a cracked gas (10) from ammonia (NH₃) comprising the following steps:
(a) preheating and evaporation (2) of liquid ammonia (1) to obtain an ammonia gaseous stream (3);
(b) catalytic cracking (5) of said ammonia gaseous stream (3) to yield a cracked gas (10) containing nitrogen, hydrogen, and unreacted ammonia;
(c) cooling of said cracked gas (10) by exchanging heat at least with said liquid ammonia (1) and/or at least part (26) of a vaporized ammonia stream (8);
(d) recovery (13) of at least part of said unreacted ammonia from the cracked gas of step (c) to obtain an ammonia-depleted stream (15) and an ammonia-enriched stream (14); wherein step (d) comprises:
(d.1) selective adsorption of ammonia on at least one molecular sieve to obtain an ammonia-charged molecular sieve and said ammonia-depleted stream (15); and
(d.2) desorption of ammonia performed by increasing a temperature of said ammonia-charged molecular sieve, and purging with a purge stream (7), to obtain said ammonia-enriched stream (14);
(e) recirculation of at least a portion of the ammonia-enriched stream (14) as feed to step (b), optionally after pre-heating and evaporation.

2. The process according to claim 1, wherein said temperature increase of step (d.2) is obtained through heat pulses heating said ammonia-charged molecular sieve, said heat pulses being provided at a first pressure, and wherein said heat pulses are concurrent, or followed by purging at a second pressure below said first pressure.

3. The process according to any of claims 1-2, wherein said step (d) comprises at least one one-stage Thermal Pressure Swing Adsorption (TPSA).

4. The process according to claim 1, wherein said step (d) comprises at least one Thermal Swing Adsorption (TSA).

5. The process according to any of the previous claims, wherein said purge stream (7) comprises or consists of a part (38) of said cracked gas (10), and/or a portion (28) of said vaporized ammonia stream (9), and/or a supplementary purging stream (22), and/or an ammonia-enriched stream generated in a step (d.2) performed on a parallel molecular sieve;
preferably said supplementary purging stream (22) being or comprising a nitrogen stream or a vapour stream.

6. The process according to any of the previous claims, wherein said molecular sieves are contained in at least two beds (23', 23"), said beds (23', 23") being arranged so that, when a first bed (23') is subjected to step (d.1), a second bed (23") is subjected to step (d.2), recovery (13) of step (d) being thus continuous;
preferably wherein said cracked gas during step (d.1) and said purge stream (7) during step (d.2) are directed through the same bed (23'; 23") countercurrently.

7. The process according to any of the previous claims, wherein said at least one molecular sieve is or comprises a 3A molecular sieve and/or a 4A molecular sieve.

8. The process according to any of the previous claims, wherein said at least one molecular sieve is an aluminosilicate molecular sieve; said aluminosilicate molecular sieve having a mean pore size comprised from 0.2 nm to 1 nm, preferably comprised from 0.2 nm to 0.4 nm.

9. The process according to any of the previous claims, wherein step (a) comprises an indirect heat exchange of said liquid ammonia (1) and/or of said at least part (26) of the vaporized ammonia stream (8), optionally after heating, with a flue gas (30) of a cracking furnace (5) used in step (b), said cracking furnace (5) including a plurality of externally heated catalytic tubes.

10. The process according to the previous claim, wherein said cracking furnace (5) comprises a convective section (34), and wherein step (a) comprises passing said liquid ammonia (1) or a vaporized ammonia stream (8) deriving therefrom through said convective section (34) in indirect heat exchange with said flue gas (30) to obtain a heated vaporized ammonia stream (9).

11. The process according to any of the previous claims, comprising:
(f) drying (24) of said ammonia gaseous stream (8) upstream of step (b); wherein step (f) comprises passing said ammonia gaseous stream (8) through at least one molecular sieve drying unit (24); preferably said molecular sieve drying unit (24) comprising one or more 3A molecular sieve(s).
more preferably a residual amount of steam after step (f) being lower than 1000 ppm by weight, preferably lower than 500 ppm by weight, more preferably lower than 100 ppm by weight, even more preferably lower than 50 ppm by weight.

12. The process according to any of the previous claims, wherein said ammonia-enriched stream (14) is a substantially anhydrous ammonia stream, said anhydrous ammonia stream having a residual amount of water lower than 1000 ppm by weight, preferably lower than 500 ppm by weight, more preferably lower than 100 ppm by weight, even more preferably lower than 50 ppm by weight.

13. The process according to any of the previous claims, comprising:
(g) recirculation of at least a portion (16) of said ammonia-depleted stream (15) as fuel (6) to a cracking furnace (5) used in step (b).

14. The process according to any of the previous claims, comprising:
(h) hydrogen recovery (17) from said ammonia-depleted stream (15) to obtain a hydrogen product (18) and a tail gas (19); wherein said step (h) comprises a step of pressure swing adsorption (PSA), or membrane purification, e.g., Pd-Membrane purification, or cryogenic purification, preferably PSA step;
(i) recirculating at least a portion of said tail gas (19), e.g., all said tail gas (19), and/or a portion (20) of said hydrogen product (18), as fuel (6) to a cracking furnace (5) used in step (b).

15. The process according to the previous claims, wherein said hydrogen product (18) has an amount of hydrogen higher than 75% molar, more preferably higher than 90% molar, even more preferably higher than 99% molar, still more preferably higher than 99.7 % molar, such as higher than 99.99999%.
